Europäisches Patentamt

European Patent Office

Office européen des brevets

(19)

(11) **EP 1 119 941 B1**

(12) **EUROPÄISCHE PATENTSCHRIFT**

(45) Veröffentlichungstag und Bekanntmachung des Hinweises auf die Patenterteilung:
**14.08.2002 Patentblatt 2002/33**

(21) Anmeldenummer: **99948830.7**

(22) Anmeldetag: **22.09.1999**

(51) Int Cl.$^7$: **H04L 9/08**

(86) Internationale Anmeldenummer:
**PCT/EP99/07052**

(87) Internationale Veröffentlichungsnummer:
**WO 00/22776 (20.04.2000 Gazette 2000/16)**

(54) **VERFAHREN ZUM ETABLIEREN EINES GEMEINSAMEN SCHLÜSSELS ZWISCHEN EINER ZENTRALE UND EINER GRUPPE VON TEILNEHMERN**

METHOD FOR ESTABLISHING A COMMON KEY BETWEEN AN EXCHANGE AND A GROUP OF SUBSCRIBERS

TECHNIQUE PERMETTANT D'ETABLIR UNE CLE COMMUNE ENTRE UN CENTRAL TELEPHONIQUE ET UN GROUPE DE PARTICIPANTS

(84) Benannte Vertragsstaaten:
**AT BE CH CY DE DK ES FI FR GB GR IE IT LI LU MC NL PT SE**

(30) Priorität: **09.10.1998 DE 19847944**

(43) Veröffentlichungstag der Anmeldung:
**01.08.2001 Patentblatt 2001/31**

(73) Patentinhaber: **Deutsche Telekom AG 53113 Bonn (DE)**

(72) Erfinder: **SCHWENK, Jörg 91239 Henfenfeld (DE)**

(56) Entgegenhaltungen:
**EP-A- 0 768 773**

- LAIH C -S ET AL: "On the design of conference key distribution systems for the broadcasting networks" IEEE INFOCOM ' 93. THE CONFERENCE ON COMPUTER COMMUNICATIONS PROCEEDINGS. TWELFTH ANNUAL JOINT CONFERENCE OF THE IEEE COMPUTER AND COMMUNICATIONS SOCIETIES. NETWORKING: FOUNDATION FOR THE FUTURE (CAT. NO.93CH3264-9), 28. März 1993 (1993-03-28) - 1. April 1993 (1993-04-01), Seiten 1406-1413 vol.3, XP000419708 Los Alamitos, CA, USA, IEEE Comput. Soc. Press, USA ISBN: 0-8186-3580-0

- STEINER M ET AL: "Diffie-Hellman key distribution extended to group communication" 3RD ACM CONFERENCE ON COMPUTER AND COMMUNICATIONS SECURITY, PROCEEDINGS OF 3RD ACM CONFERENCE ON COMPUTER AND COMMUNICATIONS SECURITY, NEW DELHI, INDIA, 14. - 16. März 1996, Seiten 31-37, XP000620975 New York, NY, USA, ACM ISBN: 0-89791-829-0 in der Anmeldung erwähnt

- BURMESTER M ET AL: "A secure and efficient conference key distribution system" ADVANCES IN CRYPTOLOGY - EUROCRYPT '94. WORKSHOP ON THE THEORY AND APPLICATION OF CRYPTOGRAPHIC TECHNIQUES. PROCEEDINGS, PROCEEDINGS OF EUROCRYPT '94, PERUGIA, ITALY, 9-12 MAY 1994, Seiten 275-286, XP000852509 1995, Springer-Verlag, Germany ISBN: 3-540-60176-7 in der Anmeldung erwähnt

- DIFFIE W ET AL: "New directions in cryptography" IEEE TRANSACTIONS ON INFORMATION THEORY, NOV. 1976, USA, Bd. IT-22, Nr. 6, Seiten 644-654, XP000565260 ISSN: 0018-9448 in der Anmeldung erwähnt

**Beschreibung**

Die Erfindung betrifft ein Verfahren zum Etablieren eines gemeinsamen Schlüssels zwischen einer Zentrale und einer Gruppe von Teilnehmern gemäß dem Oberbegriff des unabhängigen Anspruchs. Verschlüsselungsverfahren in vielfältiger Art gehören zum Stand der Technik und haben zunehmend kommerzielle Bedeutung. Sie werden dazu eingesetzt, Nachrichten über allgemein zugängliche Übertragungsmedien zu übertragen, wobei aber nur die Besitzer eines Krypto-Schlüssels diese Nachrichten im Klartext lesen können.

Ein bekanntes Verfahren zur Etablierung eines gemeinsamen Schlüssels über unsichere Kommunikationskanäle ist z. B. das Verfahren von W. Diffie und W. Hellmann ( siehe DH-Verfahren W. Diffie und M. Hellmann, siehe New Directions in Cryptography, IEEE Transaction on Information Theory, IT-22(6):644-654, November 1976) Grundlage des DH-Schlüsselaustauschs [DH76] ist die Tatsache, daß es praktisch unmöglich ist, Logarithmen modulo einer großen Primzahl p zu berechnen. Dies machen sich Alice und Bob in dem unten abgebildeten Beispiel zunutze, indem sie jeweils eine Zahl x bzw. y kleiner als p (und teilerfremd zu p-1) geheim wählen. Dann senden sie sich (nacheinander oder gleichzeitig) die x-te (bzw. y-te) Potenz einer öffentlich bekannten Zahl a zu. Aus den empfangenen Potenzen können sie durch erneutes Potenzieren mit x bzw. y einen gemeinsamen Schlüssel $K:=\alpha^{xy}$ berechnen. Ein Angreifer, der nur ax und $\alpha^y$ sieht, kann daraus K nicht berechnen. (Die einzige heute bekannte Methode dazu bestünde darin, zunächst den Logarithmus z.B. von $\alpha^x$ zur Basis a modulo p zu berechnen, und dann $\alpha^y$ damit zu potenzieren.)

| Alice | | Bob |
|---|---|---|
| Wählt x geheim | $\xrightarrow{\quad\alpha^x\quad}$ | |
| | $\xleftarrow{\quad\alpha^y\quad}$ | Wählt y geheim |
| Bildet $K := (\alpha^y)^x = \alpha^{xy}$ | | Bildet $K := (\alpha^x)^y = \alpha^{xy}$ |

Beispiel für Diffie-Hellman-Schlüsselaustausch

Das Problem beim DH-Schlüsselaustausch besteht darin, daß Alice nicht weiß, ob sie tatsächlich mit Bob kommuniziert, oder mit einem Betrüger. In IPSec wird dieses Problem durch den Einsatz von Public-Key-Zertifikaten gelöst, in denen durch eine vertrauenswürdige Instanz die Identität eines Teilnehmers mit einem öffentlichen Schlüssel verknüpft wird. Dadurch wird die Identität eines Gesprächspartners überprüfbar.

Der DH-Schlüsselaustausch kann auch mit anderen mathematischen Strukturen realisiert werden, z.B. mit endlichen Körpern $GF(2^n)$ oder Elliptischen Kurven. Mit diesen Alternativen kann man die Performance verbessern. Dieses Verfahren ist allerdings nur zur Vereinbarung eines Schlüssels zwischen zwei Teilnehmern geeignet.

Es wurden verschiedene Versuche unternommen, das DH-Verfahren auf drei oder mehr Teilnehmer zu erweitern (Gruppen DH). Einen Überblick über den Stand der Technik bietet M. Steiner, G.Tsudik, M. Waidner. in Diffie-Hellmann Key Distribution Extended to Group Communication, Proc. 3rd ACM Conference on Computer and Communicatios Security, März 1996, Neu Delhi, Indien.

Eine Erweiterung des DH-Verfahrens auf Teilnehmer A, B und C wird z.B. durch nachfolgende Tabelle beschrieben (Berechnungen jeweils mod p):

| | $A \rightarrow B$ | $B \rightarrow C$ | $C \rightarrow A$ |
|---|---|---|---|
| 1. Runde | $g^a$ | $g^b$ | $g^c$ |
| 2. Runde | $g^{ca}$ | $g^{ab}$ | $g^{bc}$ |

Nach Durchführung dieser beiden Runden kann jeder der Teilnehmer den geheimen Schlüssel $g^{abc}$ mod p berechnen.

Bei allen diesen Erweiterungen tritt mindestens eines der folgenden Probleme auf:

- Die Teilnehmer müssen in einer bestimmten Art und Weise geordnet sein, im obigen Beispiel z.B. als Kreis.
- Die Teilnehmer haben gegenüber der Zentrale keinen Einflu3 auf die Auswahl des Schlüssels.
- Die Rundenzahl ist abhängig von der Teilnehmerzahl.

Diese Verfahren sind in der Regel schwer zu implementieren und sehr rechenaufwendig.

Ein weiteres Verfahren zum gemeinsamen Etablieren eines Schlüssels ist aus DE 195 38 385.0 bekannt. Bei diesem Verfahren muß die Zentrale allerdings die geheimen Schlüssel der Teilnehmer kennen.

Weiterhin ist eine Lösung aus Burmester, Desmedt, A secure and efficient conference key distribution system, Proc. EUROCRYPT'94, Springer LNCS, Berlin 1994 bekannt, bei der zwei Runden zur Generierung des Schlüssels benötigt werden, wobei in der zweiten Runde durch die Zentrale für n Teilnehmer n Nachrichten der Länge p = ca. 1000Bit gesendet werden müssen.

Bekannt ist auch ein als (n,t)-Threshold-Verfahren bezeichnetes kryptographisches Verfahren. Mit einem (n,t)-Threshold-Verfahren kann man einen Schlüssel k so in t Teile, die shadows genannt werden, zerlegen, daß dieser Schlüssel k aus je n der t shadows rekonstruiert werden kann (vgl. Beutelspacher, Schwenk, Wolfenstetter: Moderne Verfahren der Kryptographie (2. Auflage), Vieweg Verlag, Wiesbaden 1998).

In IEEE Infocom '93. The Conference On Computer Communications Proceedings. Twelth Annual Joint Conference Of The IEEE Computer And Communications Societies. Networking: Foundation For The Future (cat. No. 93CH3264-9) (28-03-1993), Vol.3, Seiten 1406-1413, "On the Design of Conference Key Distribution Systems for the Broadcasting Networks" wird ein Verfahren zum Etablieren eines gemeinsamen Schlüssels zwischen einer Zentrale (chairman) und einer Gruppe von n Teilnehmern beschrieben, bei dem ein Threshold-Verfahren zum Einsatz kommt. Bei dieser Lösung wählt die Zentrale (chairman) einen gemeinsamen Schlüssel. Das Verfahren setzt einen sicheren Kanal zwischen dem chairman und den Teilnehmern voraus. Ein solcher sicherer Kanal kann z.B. mit dem oben angeführten DH-Verfahren [DH76] oder einer Variante etabliert werden. Pro Teilnehmer sind dazu jedoch zwei Nachrichten erforderlich, um zwischen den n Teilnehmern und der Zentrale (chairman) einen gemeinsamen Schlüssel auszuhandeln und eine Nachricht um die "public shadows zu senden.

Damit sind zum Etablieren des gemeinsamen Schlüssels insgesamt 2n+1 Nachrichten erforderlich.

Das vorliegende Verfahren zur Erzeugung eines gemeinsamen Schlüssels zwischen einer Zentrale und einer Gruppe von mindestens drei Teilnehmern soll den gleichen Sicherheitsstandard wie das DH-Verfahren aufweisen. Das Verfahren soll dabei jedoch einfach zu implementieren sein und einen minimalen Rechenaufwand benötigen.

Das erfindungsgemäße Verfahren, das dieser Aufgabenstellung gerecht wird, basiert auf den gleichen mathematischen Strukturen, wie das DH-Verfahren und weist daher vergleichbare Sicherheitsmerkmale auf. Im Vergleich zu den bisher vorgeschlagenen Gruppen-DH-Verfahren ist es wesentlich effizienter im Hinblick auf Rechenaufwand und Kommunikationsbedarf.

Nachfolgend wird das Wirkprinzip des erfindungsgemäßen Verfahrens näher erläutert.

Die Zentrale wird dabei mit Z bezeichnet, definierte Teilnehmer am Verfahren mit T1-Tn und jeder einzelne nicht konkret benannte Teilnehmer mit Ti. Die öffentlich bekannten Komponenten des Verfahrens sind eine öffentlich bekannte mathematische Gruppe G, vorzugsweise die multiplikative Gruppe aller ganzen Zahlen modulo einer großen Primzahl p, und ein Element g der Gruppe G, vorzugsweise eine Zahl $0<g<p$ mit großer multiplikativer Ordnung. Für die Gruppe G können jedoch auch andere geeignete mathematische Strukturen verwendet werden, z.B. die multiplikative Gruppe eines endlichen Körpers, oder die Gruppe der Punkte einer elliptischen Kurve.

Das Verfahren verläuft in drei Arbeitsschritten.

Im ersten Arbeitsschritt wird von jedem Teilnehmer Ti eine Nachricht der Form (Ti, $g^i$ mod p) an die Zentrale gesendet, wobei i eine mittels eines Zufallsgenerators gewählte zufällige Zahl des Teilnehmers Ti ist.

Im zweiten Arbeitsschritt wird in der Zentrale Z

- eine zufällige Zahl z generiert und für jeden Teilnehmer Ti die Zahl $(g^i)^z$ mod p berechnet.
- Bei n Teilnehmern werden in der Zentrale Z dann aus diesen n Zahlen n shares mit Hilfe eines an sich bekannten (n,2n-1) Threshold Verfahrens abgeleitet.
- In der Zentrale Z werden n-1 weitere shares $s^1$-$s^{n-1}$ ausgewählt und zusammen mit der Zahl $g^z$ mod p an alle Teilnehmer T1-Tn gesendet.

Im dritten Arbeitsschritt wird bei jedem Teilnehmer Ti der gemeinsamen Schlüssel k berechnet, wobei

- $(g^z)^i$ mod p = $(g^i)^z$ mod p berechnet wird,
- daraus ein share des Threshold Verfahrens abgeleitet wird und
- mit diesem share und $s^1$,...$s^{n-1}$ als Geheimnis der gemeinsame Schlüssel k ermittelt wird.

Nachfolgend wird das erfindungsgemäße Verfahren anhand eines konkreten Beispiels für drei Teilnehmer A, B, und C sowie einer Zentrale Z näher erläutert. Die Anzahl der Teilnehmer ist jedoch auf beliebig viele Teilnehmer erweiterbar.

Bei diesem Beispiel beträgt die Länge der Zahl p 1024 Bit; g hat eine multiplikative Ordnung von mindestens $2^{160}$.

Das erfindungsgemäße Verfahren läuft nach folgenden Verfahrensschritten ab:

1. Teilnehmer A, B und C senden $g^a$ mod p, $g^b$ mod p und $g^c$ mod p an die Zentrale Z.

2. In der Zentrale Z wird $g^{az}$ mod p, $g^{bz}$ mod p und $g^{cz}$ mod p berechnet, wobei jeweils die 128 Least Significant Bits davon als shares $S_A$, $S_B$ bzw. $s_C$ verwendet werden. In der Zentrale Z wird mittels des (n,2n-1)-Threshold-Verfahrens ein Polynom P(x) über einem endlichen Körper GF($2^{128}$) vom Grad 2 berechnet, das durch die Punkte $(1,s_A)$, $(2,s_B)$ und $(3,s_C)$ geht und durch diese eindeutig festgelegt ist. Der gemeinsame Schlüssel k ist der Schnittpunkt dieses Polynoms mit der y-Achse, d. h. k; =P(0). Die Zentrale Z sendet nun $g^z$ mod p, $s_1$:=P(4) und $s_2$:=P(5) an die Teilnehmer A, B und C.

3. Beim Teilnehmer A wird $(g^z)^2$ mod p berechnet. Im Ergebnis erhält der Teilnehmer A mit den 128 Least Significant Bits dieses Wertes den share $s_A$, der zusammen mit den shares $s_1$ und $s_2$ ausreicht, das Polynom P'(x) und damit auch den Schlüssel k zu bestimmen. Bei den Teilnehmern B und C wird analog verfahren.

Das oben beschriebene Verfahren kommt mit der minimalen Anzahl von zwei Runden zwischen den Teilnehmern T1-Tn und Zentrale Z aus. In der zweiten Runde kann der Aufwand für die von der Zentrale an die n Teilnehmer zu übertragenden Zeichenfolgen im Gegensatz zu der Lösung von Burmester und Desmedt auf eine Länge von jeweils 128 Bit pro Teilnehmer reduziert werden.

## Patentansprüche

1. Verfahren zum Etablieren eines gemeinsamen Schlüssels k zwischen einer Zentrale Z und einer Gruppe von Teilnehmern T1-Tn mit einer öffentlich bekannten mathematischen Gruppe G und einem Element g∈G von großer Ordnung in der Gruppe G, so daß für die Gruppe G und das Element g die Berechnung des diskreten Logarithmus praktisch unmöglich ist, und unter Verwendung eines an sich bekannten Threshold-Verfahrens, **dadurch gekennzeichnet, daß**

a) von jedem Teilnehmer Ti eine Zufallszahl i generiert und aus dem bekannten Element g EG und der jeweiligen Zufallszahl i von jedem Teilnehmer Ti der Wert $g^i$ berechnet und zur Zentrale Z gesendet wird, daß

b) in der Zentrale Z eine Zufallszahl z generiert wird, daß aus der Zufallszahl z und den empfangenen Werten $g^i$ die Werte $(g^i)^z$ in G berechnet werden, daß aus diesen Werten n shares $(s_1,...,s_n)$ des Threshold-Verfahrens abgeleitet werden, und daß aus den shares $(s_1,...,s_n)$ das (n,2n-1)-Threshold-Verfahren konstruiert wird, wobei das durch dieses Verfahren implizit gegebene Geheimnis der zu etablierende Schlüssel k ist, daß in der Zentrale Z n-1 weitere, von den shares $(s_1,...,s_n)$ verschiedene shares $(s_{n+1},...s_{2n-1})$ zusammen mit dem Wert $g^z$ in G berechnet und an die Teilnehmer T1-T übertragen werden, und daß

c) bei jedem Teilnehmer Ti der zu etablierende Schlüssel k dadurch rekonstruiert wird, daß aus dem von der Zentrale Z übertragenen Wert $g^z$ und der Zufallszahl i des jeweiligen Teilnehmers Ti der Wert für $(g^z)^i$ in G berechnet wird, daß aus dem resultierenden Wert mittels des Threshold Verfahrens der share $s_i$ abgeleitet wird und daß mit dem share $s_i$ und den von der Zentrale Z übertragenen shares $(s_{n+1},...s_{2n-1})$ mit Hilfe des (n,2n-1)-Threshold-Verfahrens der Schlüssel k rekonstruiert wird.

## Claims

1. Method for establishing a common key k between a central station Z and a group of users T1-Tn with a publicly known mathematical group G and an element g ∈ G of high order in group G, so that the calculation of the discrete logarithm is virtually impossible for group G and element g, and using a known threshold method, **characterized in that**

a) a random number i is generated by each user Ti and the value $g^i$ is calculated from the known element g ∈ G and the respective random number i by each user Ti and is sent to the central station Z;

b) a random number z is generated in the central station Z, wherein the values $(g^i)^z$ in G are calculated from the random number z and the received values $g^i$, n shares $(s_1,...,s_n)$ of the threshold method being derived from said values, the (n,2n-1) threshold method being constructed from the shares $(s_1,...,s_n)$, the secret implicitly given by this method being the key k which is to be established, wherein, in the central station Z, n-1 further shares $(s_{n+1},...,s_{2n-1})$ different from the shares $(s_1,...,s_n)$ are calculated together with the value $g^z$ in G and are transmitted to the users T1-Tn; and

c) at each user Ti the key k to be established is reconstructed **in that** the value for $(g^2)^1$ in G is calculated from the value $g^z$ transmitted by the central station Z and from the random number i of the respective user Ti, wherein the share $s_i$ is derived from the resulting value by means of the threshold method, the key k being reconstructed, using the (n,2n-1) threshold method, with the share $s_i$ and the shares $(s_{n+1},...,s_{2n-1})$ transmitted by the central station Z.

**Revendications**

1. Procédé permettant d'établir une clé commune k entre une centrale Z et un groupe d'usagers T1-Tn avec un groupe G public mathématiquement connu et un élément $g \in G$ d'un ordre de grandeur élevé dans le groupe G, de sorte que le calcul du logarithme discret pour le groupe G et l'élément g soit pratiquement impossible, et ayant recours à une méthode de seuil quant à elle connue, **caractérisé en ce que**

   a) un nombre aléatoire i est généré par chaque usager Ti et la valeur $g_i$ est calculée par chaque usager Ti à partir de l'élément connu $g \in G$ et du nombre aléatoire i correspondant , puis envoyée à la centrale Z,

   b) un nombre aléatoire z est généré dans la centrale Z, **en ce que** les valeurs $(g^i)^z$ sont calculées dans G à partir du nombre aléatoire z et des valeurs $g^i$ reçues, **en ce que** à partir de ces valeurs, n parties $(s_1, ..., s_n)$ de la méthode de seuil sont dérivées, et **en ce que** la méthode de seuil (n,2n-1) est constituée à partir des parties $(s_1, ..., s_n)$, la clé k étant établie grâce au secret implicitement donné par ce procédé, **en ce que**, dans la centrale Z, n-1 autres parties $(s_{n+1}, ..., s_{2n-1})$ différentes des parties $(s_1, ..., s_n)$ sont calculées dans G avec la valeur $g^2$ et transmises aux usagers T1-Tn, et

   c) pour chaque usager Ti, la clé k à établir est reconstituée par le fait que la valeur pour $(g^2)^i$ est calculée dans G à partir de la valeur g* transmise par la centrale Z et du nombre aléatoire i de l'usager Ti en question, que la partie $s_i$ est dérivée au moyen de la méthode de seuil à partir de la valeur qui en résulte, et que la clé k est reconstituée avec la partie $s_i$ et les parties $(s_{n+1}, ..., s_{2n-1})$ transmises par la centrale Z au moyen de la méthode de seuil (n, 2n-1).